# EUROPÄISCHE PATENTSCHRIFT

(11) **EP 0 807 468 B1**
(45) Veröffentlichungstag und Bekanntmachung des Hinweises auf die Patenterteilung: **19.12.2001**
(21) Anmeldenummer: 97112710.5
(22) Anmeldetag: 31.08.1994
(51) Int. Cl.: B01L 7/00, B01L 9/06, C12Q 1/68

(54) **Vorrichtung zur automatischen Durchführung von Polymerase-Kettenreaktionen**
Device for automatically carrying out polymerase chain reactions
Dispositif destiné à la réalisation automatique de réactions en chaîne de polymérase

(30) Priorität: 10.09.1993 CH 271793
(43) Veröffentlichungstag der Anmeldung: 19.11.1997
(62) Teilanmeldung aus: 94113574.1
(73) Patentinhaber: F. HOFFMANN-LA ROCHE AG, 4070 Basel (CH)
(72) Erfinder: Moser, Rolf, 6354 Vitznau (CH); Birrer, Lukas, 6005 Luzern (CH)
(74) Vertreter: AMMANN PATENTANWAELTE AG BERN

(56) Entgegenhaltungen:
- EP-A- 0 488 769
- WO-A-91/18551
- WO-A-92/20778
- US-A- 4 865 986
- WYLD: "An automatic biochemical analyser" RADIO AND ELECTRONIC ENGINEER, Bd. 42, Nr. 9, September 1972, LONDON GB, Seiten 391-401, XP002061487

## Beschreibung

Die Erfindung betrifft eine Vorrichtung zur automatischen Durchführung von Polymerase-Kettenreaktionen in einer Vielzahl von Reaktionsbehältern, wobei jedes Reaktionsbehälter mit einem Deckel verschlossen ist und ein vorbestimmtes Volumen eines flüssigen Reaktionsgemisches enthält, welche Vorrichtung folgende Komponenten enthält:
a) einen Träger, der eine Anordnung von Kammern zur Aufnahme der Reaktionsbehälter hat, wobei jede Kammer dazu geeignet ist, den unteren Teil eines Reaktionsbehälters aufzunehmen, und wobei der Träger aus einem Material besteht, dass eine hohe thermische Leitfähigkeit hat, und dass er eine obere Fläche, eine untere Fläche und eine zylindrische Aussenwand hat, wobei jede der Kammer des Trägers eine Oeffnung hat, die in der oberen Fläche des Trägers liegt,
b) in den Kammern des Trägers angeordneten Reaktionsbehälter, die je mit einem Deckel verschlossen sind,
c) eine computergesteuerte Steuer- und Regeleinrichtung, und
d) durch die Steuer- und Regeleinrichtung gesteuerte Mittel zur zyklischen Aenderung der Temperatur des Trägers.

Die Erfindung betrifft insbesondere eine Vorrichtung dieser Art, die vorzugsweise als integrierter Bestandteil eines automatischen Analysengerätes zur Durchführung der Polymerase-Kettenreaction ("Polymerase-Chain-Reaction") geeignet ist.

Eine Vorrichtung der oben erwähnten Art ist in der EP-A- 0 488 769 A2 beschrieben. Diese Vorrichtung enthält eine federgespannte Befestigung, mit der eine Heizungsfolie gegen den Träger gepresst wird. Die Federspannung hat dabei einen bestimmten Wert, der nicht geändert werden kann.

Eine Vorrichtung der oben erwähnten Art ist auch in der EP-A- 0 236 069 A2 beschrieben, in der ausserdem darauf hingewiesen wird, dass Mittel zur zyklischen Aenderung der Temperatur eines Trägers der oben erwähnten Art ein Peltier-Element enthalten können.

Vorrichtungen der eingangs genannten Art werden "Thermal cycler" genannt. Diese Bezeichnung wird in der nachstehenden Beschreibung verwendet.

Die in der EP-A- 0 488 769 A2 und in der EP-A- 0 236 069 A2 beschriebenen Vorrichtungen haben den Nachteil, dass die Reaktionsbehälter matrixartig angeordnet sind, was die Erzielung einer gleichmässigen Temperatur bei allen Reaktionsbehälter erschwert. Die bekannten Vorrichtungen sind ausserdem relativ sperrig und ihrem Betrieb erfordert eine relativ grosse Leistung. Sie sind daher nicht dazu geeignet, als integrierter Bestandteil eines modernen automatischen Analysengerätes verwendet zu werden.

Aus der U.S. Patentschrift US-A-4,865,986 ist ferner eine Vorrichtung zur Erwärmung und Kühlung von Reaktionsbehältern bekannt, bei der eine trennbare Verbindung zwischen Peltierelementen und einen Kühlblock herstellbar ist, wobei diese trennbare Verbindung mittels eines drehbaren Elementes trennbar ist. Ein Pressen der Peltierelemente gegen den Kühlblock mit einer veränderbaren Kraft ist bei dieser Vorrichtung nicht realisierbar. Der Erfindung liegt daher die Aufgabe zugrunde eine Vorrichtung der eingangs erwähnten Art zur Verfügung zu stellen, mit der die oben erwähnten Nachteile behoben werden können.

Diese Aufgabe wird erfindungsgemäss mit einer Vorrichtung der eingangs genannten Art gelöst, bei welcher die Mittel zur zyklischen Aenderung der Temperatur des Trägers, welche Mittel wenigstens ein Peltier-Element enthalten, und die dadurch gekennzeichnet ist, dass
(i) die Anordnung der Kammer im Träger ringförmig ist,
(ii) das wenigstens eine Peltier-Element mit der unteren Fläche des Trägers thermisch verbunden ist, und
(iii) das wenigstens eine Peltier-Element, durch eine zentrale, federvorgespannte Befestigung gegen den Träger gepresst wird, welche Befestigung eine Kraft auf die Mitte des Peltier-Elements ausübt und eine durch eine Schraube gepresste Feder enthält, deren Spannung mit der Schraube eingestellt werden kann.

Die wesentlichen Vorteile der erfindungsgemässen Vorrichtung sind, dass mit ihr eine gleichmässige Temperatur bei allen Reaktionsbehälter sichergestellt ist, und dass sie relativ kleine Abmessungen hat und deren Betrieb eine relativ geringe Leistung erfordert, so dass sie dazu geeignet ist, als integrierter Bestandteil eines automatischen Analysengerätes verwendet zu werden.

Ein weiterer Vorteil der erfindungsgemässen Vorrichtung ist, dass sie die oben erwähnten Nachteile der bekannten Vorrichtungen dieser Art auf möglichst einfache Weise und mit geringem Aufwand behebt.

In einer bevorzugten Ausführungsform enthält die erfindungsgemässe Vorrichtung ferner einen klappbaren Deckel, der ein Heizelement enthält, das zum Beheizen der verschlossenen, im Träger angeordneten Proberöhrchen dient. Die Zusammenwirkung dieses Heizelementes mit dem Peltier-Element ermöglicht, die erforderliche Schnelligkeit der Temperaturänderungen des Thermoblocks sowie die erforderliche Präzision und Homogenität der Temperaturverteilung zu erreichen.

In einer weiteren bevorzugten Ausführungsform enthält die erfindungsgemässe Vorrichtung ferner ein Heizelement, das um den Träger und entlang des Umfangs seiner zylindrischen, äusseren Wand angeordnet ist. Bei dieser Ausführungsform wird das Peltierelement nur zum Kühlen verwendet. Dies bringt den Vorteil einer Entlastung des Peltierelementes von thermisch bedingten mechanischen Stress und trägt dazu bei die Lebensdauer des Peltierelementes zu verlängern.

### Beschreibung eines Ausführungsbeispiels

Ein Ausführungsbeispiel der Erfindung wird im folgenden anhand der beiliegenden Zeichnungen beschrieben. Es zeigen:
- Fig. 1: einen aus einem Analysengerät herausgenommenen Thermalcycler-Teil 2, der Thermalcycler 18 und 19 enthält, wobei der Thermalcycler 18 geöffnet und einen daraus entnommenen Proberöhrchenring 23 gezeigt wird,
- Fig. 2: einen Schnitt durch die Linie II- II in Fig. 1, wobei der Thermalcycler 18 geschlossen ist,
- Fig. 3: eine schematische Darstellung einer "Master-Slave"-Steuerung zur Regelung und Ueberwachung der Betriebsparameter eines Thermalcyclers,
- Fig. 4: ein Temperatur-Zeit-Diagramm eines im Master-Prozessor gespeicherten Temperaturverlaufes bzw. die daraus resultierenden Temperaturen des Thermoblocks und der Probe.

### Thermalcycler

In der nachstehenden Beschreibung wird mit Thermalcycler eine Vorrichtung bezeichnet, die zur automatischen Durchführung von Temperaturzyklen in wenigstens einem mit einem Deckel geschlossenen Proberöhrchen 21 dient, das ein vorbestimmtes Volumens eines flüssigen Reaktionsgemisches enthält.

Nachstehend wird ein Thermalcycler beschrieben, der vorzugsweise als Bestandteil eines automatischen Analysengerätes zur Durchführung der Polymerase-Kettenreaction geeignet ist. Das Analysengerät ist beispielsweise zur Durchführung von Immunoassays ausgelegt.

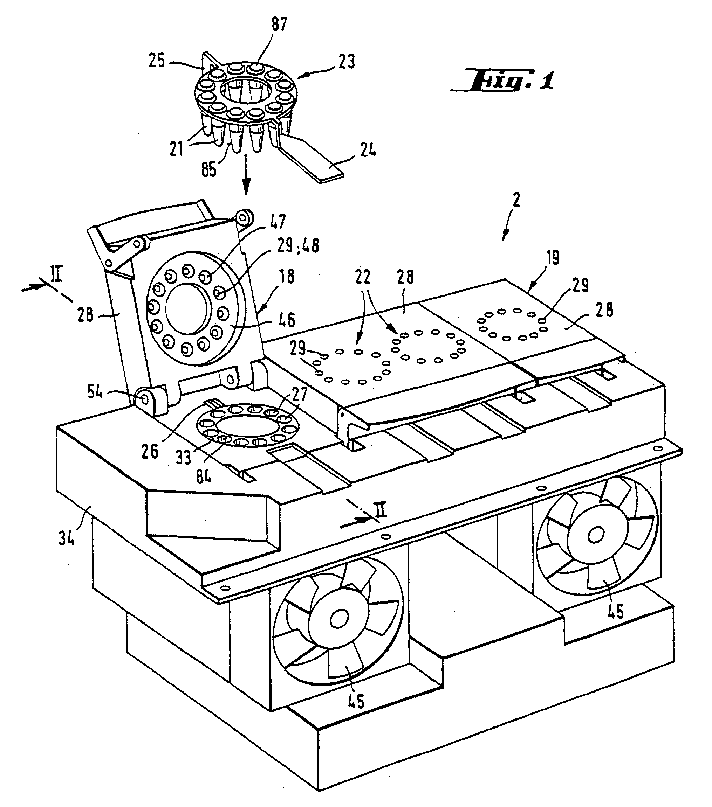

In Fig. 1 ist ein Thermalcycler-Teil 2 aus einem Analysengerät ausgebaut dargestellt. Dieser Thermalcycler-Teil 2 enthält z.B. zwei identische Thermalcycler 18, 19 und eine Stand-by Position 22. Die nachstehende Beschreibung des Thermalcycler 18 gilt auch für den Thermalcycler 19.

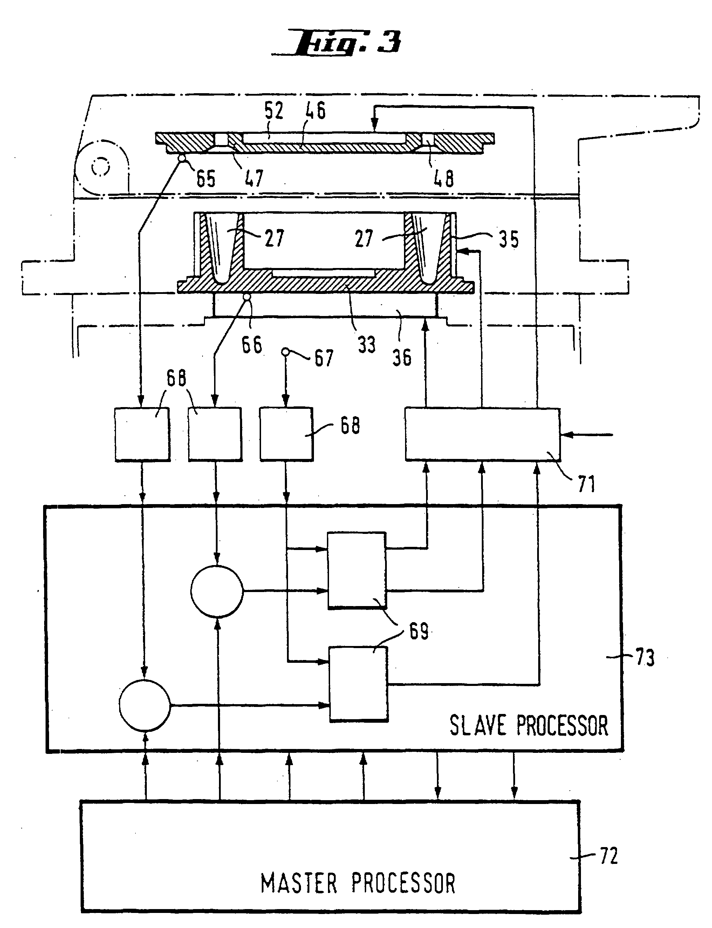

Der Thermalcycler 18 enthält folgende Komponenten :
a) einen Thermoblock 33, der als Träger der Proberöhrchen dient, und der eine ringförmige Anordnung von Ausnehmungen 27 hat, wobei jede Ausnehmung als Kammer zur Aufnahme des unteren Teils eines der Proberöhrchen 21 dient,
b) eine in Fig. 3 dargestellte computergesteuerte Steuer- und Regeleinrichtung, und
c) durch diese Steuer- und Regeleinrichtung gesteuerte Heiz- bzw. Kühlelemente als Mittel zur zyklischen Aenderung der Temperatur des Thermoblocks 33.

Der Thermoblock 33 besteht aus einem Material, dass eine hohe thermische Leitfähigkeit hat. Der Thermoblock 33 ist vorzugsweise ein

c) durch diese Steuer- und Regeleinrichtung gesteuerte Heiz- bzw. Kühlelemente als Mittel zur zyklischen Aenderung der Temperatur des Thermoblocks 33.

Der Thermoblock 33 besteht aus einem Material, dass eine hohe thermische Leitfähigkeit hat. Der Thermoblock 33 ist vorzugsweise ein Körper aus Aluminium oder Silber. Der Thermoblock 33 hat eine obere Fläche, eine untere Fläche und eine zylindrische Aussenwand, wobei jede der Ausnehmungen 27 des Thermoblocks 33 eine Oeffnung hat, die in der oberen Fläche des Trägers liegt.

Wie in Figur 1 dargestellt, sind z.B. zwölf Proberöhrchen 21 zu einem Proberöhrchenring 23 zusammengefasst. Die Proberöhrchen 21 sind im unteren Bereich konisch, im oberen Bereich zylindrisch geformt und durch einen Deckel 87 dicht verschlossen. Wie in Fig. 1 gut zu erkennen ist, kann eine derartige Proberöhrchenanordnung 23 in entsprechende Ausnehmungen 27 des Thermoblocks 33 des Thermalcyclers 18 eingesetzt werden.

### Zugriff zum Inhalt eines Proberöhrchens

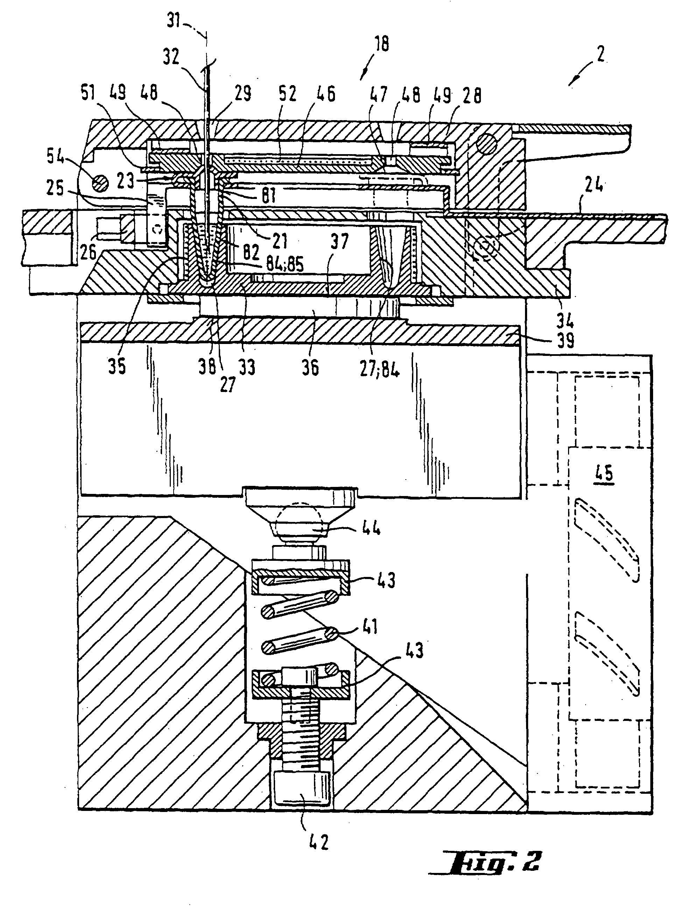

Der Thermalcyclers 18 hat einen klappbaren Deckel 28, der pro Ausnehmung 27 des Thermoblocks 33 eine Oeffnung 29 aufweist, die ein Durchstechen des Verschlusses 87 des in der Ausnehmung eingesetzten Proberöhrchens 21 mit einer Pipettiernadel ermöglicht. Wie aus Fig. 2 ersichtlich, fluchtet bei geschlossener Stellung des Klappdeckels 28 jede der Oeffnungen 29 mit der Längsachse 31 des entsprechenden Proberöhrchens 21.

Die Oeffnungen 29 des Klappdeckels 28 ermöglichen den Zugriff zum Inhalt jedes Proberöhrchens bei geschlossenem Klappdeckel 28. Dafür wird die Pipettiernadel 32 einer Pipettiereinrichtung durch eine der Oeffnungen 29 eingeführt, der Deckel 87 des Proberöhrchens 21 mit der Pipettiernadel 32 durchgestochen und anschliessend ein bestimmtes Volumen der im Proberöhrchen enthaltenen Flüssigkeit abgesaugt.

### Wärmeübertragung zwischen Thermoblock und Proberöhrchen

Es ist aus Fig. 2 ersichtlich, dass die Ausnehmungen 27 im Thermoblock 33 an den konischen Bereich der Proberöhrchen 21 angepasst sind, sodass die Umfangswandung des Proberöhrchens 21 zuverlässig an die Innenwandung der Ausnehmung 27, zwecks bester Wärmeübertragung, zur Anlage kommen kann. Um die thermische Reaktionsgeschwindigkeit, Präzision und Homogenität zu erhöhen, ist der Thermoblock 33 möglichst wärmeisoliert in einem Gehäuse 34 gehaltert und weist wenig Masse bei guter thermischer Leitfähigkeit auf.

### Heizelement im klappbaren Deckel des Thermalcyclers

Der Deckel 28 enthält vorzugsweise ein Heizelement, z.B. eine elektrische Widerstandsheizung 52, die zum Beheizen der verschlossenen, im Thermoblock 33 angeordneten Proberöhrchen dient.

Die elektrische Widerstandsheizung 52 wird in Kombination mit einem nachstehend beschriebenen Peltier-Element 36 verwendet, um ein gewünschtes Temperaturprofil (Temperaturverlauf über ein bestimmtes Zeitintervall) im Thermoblock 33 zu erzielen. In dieser Ausführungsform wird das Peltier-Element je nach der zu erreichenden Temperatur innerhalb eines Temperaturprofils als Kühl- oder als Heizelement verwendet.

Die Zusammenwirkung der elektrischen Widerstandsheizung 52 mit dem Peltier-Element 36 ermöglicht, die erforderliche Schnelligkeit der Temperaturänderungen des Thermoblocks 33 sowie die erforderliche Präzision und Homogenität der Temperaturverteilung zu erreichen. Durch die Wirkung der Widerstandsheizung 52 wird ausserdem eine etwaige Kondensatbildung im Deckelbereich des Proberöhrchens 21 vermieden.

### Verschliess- und Anpresseinrichtung des Klappdeckels des Thermalcyclers

Der Klappdeckel 28 enthält vorzugsweise eine Verschliess- und Anpresseinrichtung zum Festhalten der verschlossenen, im Thermoblock 33 angeordneten Proberöhrchen 21. Hierfür weist der Klappdeckel 28 eine federnd gehaltene Andruckplatte 46 auf, welche jeden Proberöhrchen 21 mit einer definierten Kraft in die Ausnehmungen 27 des Thermoblocks 33 hineindrückt. Ausnehmungen 47 zur Aufnahme der kalottenformigen Deckel 87 der Proberöhrchen 21 sowie Durchstichöffnungen 48 für die Pipettiernadel 32 sind koaxial zu den Proberöhrchen 21 in der Andruckplatte

Die oben erwähnte Widerstandsheizung 52 ist vorzugsweise in der federnden Andruckplatte 46 enthalten.

### Peltier-Element als Kühl- oder Heizelement

Wie in Fig. 2 dargestellt, enthält der Thermalcycler 18 wenigstens ein Peltier-Element 36 als Teil der im Thermalcycler 18 vorgesehenen Mittel zur zyklischen Aenderung der Temperatur des Thermoblocks 33. Das Peltier-Element 36 ist mit seiner einen Wärmeübergangsfläche 37 grossflächig mit der unteren Fläche des Thermoblocks 33 und mit seiner anderen Wärmeübergangsfläche 38 grossflächig an einen Kühlkörper 39 zur Wärmeabfuhr thermisch in Kontakt gebracht. Der Kühlkörper 39 ist vorzugsweise aus Aluminium oder Kupfer. Zur Wärmeabfuhr ist ein schaltbarer Ventilator 45 vorgesehen.

Das in Fig. 2 schematisch dargestellte Peltier-Element 36 ist vorzugsweise eine Anordnung solcher Elemente.

In der oben erwähnten ersten Ausführungsform des Thermalcyclers wird das Peltier-Element 36 als Kühl- oder als Heizelement verwendet. Diese Betriebsweise des Peltier-Elementes 36 und seine Zusammenwirkung mit der elektrischen Widerstandsheizung 52 ermöglicht, die erforderliche Temperatur des Thermoblocks innerhalb eines Temperaturprofils zu erreichen.

Zur Verlängerung der Lebensdauer des Peltier-Elementes 36 ist dieser vor thermodynamisch begründeten mechanischen Spannungsspitzen dadurch geschützt, dass das Peltier-Element 36 durch eine zentrale, federvorgespannte Befestigung gegen den Thermoblock 33 gepresst gehalten wird. Hierfür wird das Peltier-Element elastisch zwischen den Wärmeübertragungsflächen des Thermoblocks 33 und des Kühlkörpers 39 eingespannt. Dafür wird der Kühlkörper 39 z.B. mittels einer Druckfeder 41 mit seiner Kontaktfläche gegen das Peltier-Element 36 gedrückt. Die Federspannung kann über eine Einstellschraube 42, Federteller 43 und ein Kugelgelenk 44 eingestellt werden, welches die Freiheitsgrade des Kühlkörpers 39 noch weiter erhöht.

### Peltier-Element ausschliesslich als Kühlelement

In einer Variante des hier beschriebenen Ausführungsbeispiels wird das Peltier-Elementes 36 ausschliesslich als kälteerzeugendes Element, d.h. nur als Kühlelement verwendet. Dadurch wird eine Verlängerung der Lebensdauer des Peltier-Elementes erreicht.

### Zusätzliches Heizelement um den Thermoblock

In einer zweiten Ausführungsform des Thermalcyclers enthält dieser vorzugsweise zusätzlich eine elektrische Widerstandsheizung 35, die um den Thermoblock 33 und entlang des Umfangs seiner zylindrischen, äusseren Wand angeordnet ist. Bei Verwendung dieses zusätzliches Heizelementes im Thermalcycler wird das Peltier-Element 36 nur zum Kühlen verwendet. Dies bringt den Vorteil einer Entlastung des Peltier-Elements von thermisch bedingtem mechanischem Stress und trägt dadurch dazu bei die Lebensdauer des Peltier-Elements im Thermalcycler zu verlängern.

### Steuerung und Regelung des Thermalcyclers

Eine Steuer- und Regeleinrichtung des Thermalcyclers 18 über Master-Slave-Prozessoren 72, 73 ist in Fig. 3 schematisch dargestellt.

Die Temperatur der Andruckplatte 46 des Klappdeckels 28, des Thermoblocks 33 und der Umgebung wird mittels Temperaturfühler 65, 66, 67 erfasst und über ein Temperatur-Interface 68 dem Slave-Prozessor 73 zugeführt. Im Master-Prozessor 72 (Schnittstelle zum Benutzer) werden unter anderem die Temperatursollwerte, die Zeitsollwerte, die Anzahl der Temperaturzyklen und die Geschwindigkeit der Heiz- und Kühlvorgänge eingegeben.

Es können bereits vorbestimmte, gespeicherte Temperatur/Zeitprofile gewählt und abgefahren werden. Die Eingabe erfolgt über die Tastatur 16 oder eine andere Schnittstelle, Diese Daten werden dem Slave-Prozessor 73 zugeführt, welcher über Regler 69 einen Leistungssteller 71 ansteuert, welcher wiederum die Energieversorgung der Heizelemente 35, 52 und des Peltier-Elements 36 regelt. Die Rückmeldungen (Ist-Werte) werden über den Slave-Prozessor 73 dem Master-Prozessor 72 zugeführt und dort verarbeitet bzw. dem Benutzer angezeigt. Auf diese weise wird der Benutzer über die momentane Probentemperatur, die bereits erreichten Temperaturen mit welcher wiederum die Energieversorgung der Heizelemente 35, 52 und des Peltier-Elements 36 regelt. Die Rückmeldungen (Ist-Werte) werden über den Slave-Prozessor 73 dem Master-Prozessor 72 zugeführt und dort verarbeitet bzw. dem Benutzer angezeigt. Auf diese weise wird der Benutzer über die momentane Probentemperatur, die bereits erreichten Temperaturen mit Zeitangabe und die noch zu erreichenden Temperaturen mit Zeitangabe informiert.

Der Betriebszustand des Systems wird ständig überwacht und protokolliert. Fehler, die nicht vom System selbst behoben werden können, bewirken eine automatische Abschaltung oder Fehlermeldung.

Die Temperatur der Probe wird aus der Temperatur des Thermoblocks 33 rechnerisch ermittelt. Dazu wird die Uebertragungsfunktion vom Probenraum zur Probe im Proberöhrchen 21 bestimmt. Diese Funktion ist im wesentlichen ein Tiefpass mit Totzeit.

Anhand geeigneter Regelalgorythmen (abgetastete Systeme) wird jeweils die Stellgrösse berechnet, die nötig ist, um die Temperatur der Probe der vorgegebenen Sollwerttemperatur nachzuführen. Diese Berechnungen werden mit einem Signalprozessor durchgeführt. Die berechnete Stellgrösse wird in Form einer Pulsweite dem Leistungssteller 71 zugeführt. Der Leistungssteller 71 ist z.B. ein Leistungs-FET mit einer dazu passenden Schutz- und Entstörschaltung.

Die oben beschriebene Steuerung und Regelung ermöglicht den Einsatz des Thermalcyclers um Proben in einem im Thermalcyclers eingesetzten Probenröhrchenring nach bestimmten Temperaturprofilen zu heizen und zu kühlen. Die Temperaturprofile sind definiert durch Plateau-Temperaturen definierter Dauer, und der Gradient, der die Zeit definiert, bei der eine Plateau-Temperatur erreicht sein muss. Bedingung ist, dass alle Proben im Thermalcycler zur gleichen Zeit die gleichen Temperaturen haben.

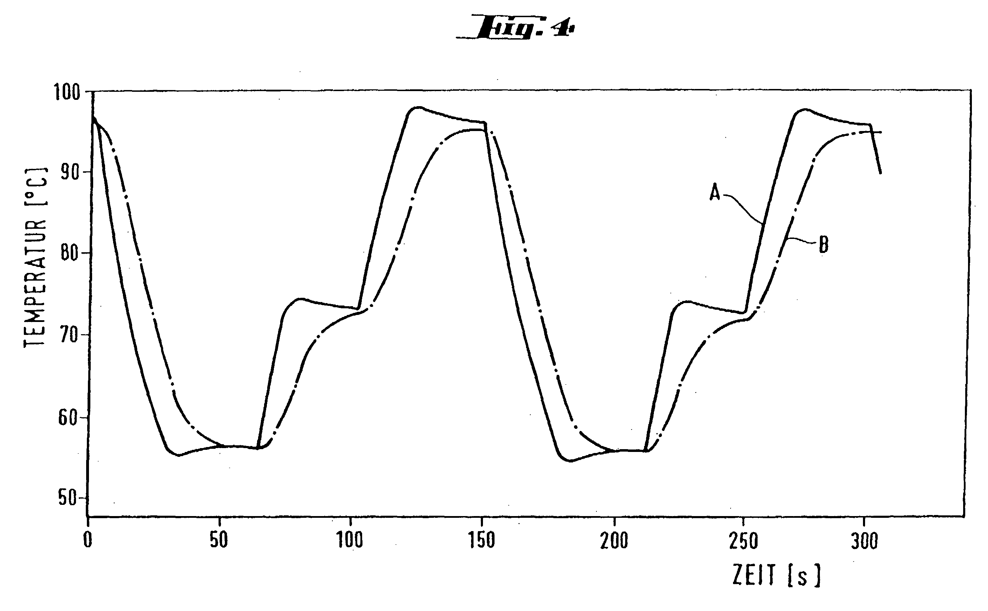

In Fig. 4 sind beispielsweise Temperaturverläufe aus einem Zyklusprozess aufgezeigt. Kurve A zeigt den Temperaturverlauf am Thermoblock 33, die Kurve B zeigt den Temperaturverlauf der Flüssigkeit im Reaktionsbehälter 21. Mit dem Thermalcycler können Temperaturen zwischen 40 und 98 Grad Celsius eingestellt werden. Typischerweise liegen die untere Temperaturen zwischen 50 und 60 Grad Celsius und die oberen Temperaturen zwischen 90 und 96 Grad Celsius. Wenn die mittlere Temperatur benutzt wird, liegt sie um 72 Grad Celsius. Die mit dem Thermalcycler erzielte Heiz-/Kühl-Geschwindigkeit beträgt 1 Grad Celsius pro Sekunde. Ein typisches Zyklus hat eine Dauer von 120 Sekunden. Wenn die entsprechende Temperaturen länger als 10 Sekunden gehalten werden müssen, verlängert sich die Zyklusdauer entsprechend.

## Patentansprüche

1. Vorrichtung zur automatischen Durchführung von Polymerase-Kettenreaktionen in einer Vielzahl von Reaktionsbehältern, wobei jeder Reaktionsbehälter mit einem Deckel verschlossen ist und ein vorbestimmtes Volumen eines flüssigen Reaktionsgemisches enthält, welche Vorrichtung folgende Komponenten enthält:
a) einen Träger (33), der eine Anordnung von Kammern (27) zur Aufnahme der Reaktionsbehälter (21) hat, wobei jede Kammer dazu geeignet ist, den unteren Teil eines Reaktionsbehälters aufzunehmen, und wobei der Träger (33) aus einem Material besteht, das eine hohe thermische Leitfähigkeit hat, und der eine obere Fläche, eine untere Fläche und eine zylindrische Aussenwand hat, wobei jede der Kammern (27) des Trägers (33) eine Oeffnung hat, die in der oberen Fläche des Trägers liegt,
b) in den Kammern (27) des Trägers (33) angeordneten Reaktionsbehälter (21), die je mit einem Deckel (87) verschlossen sind,
c) eine computergesteuerte Steuer- und Regeleinrichtung, und
d) durch die Steuer- und Regeleinrichtung gesteuerte Mittel zur zyklischen Aenderung der Temperatur des Trägers, welche Mittel wenigstens ein Peltier-Element (36 ) enthalten,
welche Vorrichtung **dadurch gekennzeichnet ist, dass**
(i) die Anordnung der Kammern (27) im Träger (33) ringförmig ist,
(ii) das wenigstens eine Peltier-Element (36 ) mit der unteren Fläche des Trägers thermisch verbunden ist, und
(iii) das wenigstens eine Peltier-Element (36 ), durch eine zentrale, federvorgespannte Befestigung (41, 42, 43, 44) gegen den Träger (33) gepresst wird, welche Befestigung eine Kraft auf die Mitte des Peltier-Elements (36) ausübt und eine durch eine Schraube (42) gepresste Feder (41) enthält, deren Spannung mit der Schraube eingestellt werden kann.

2. Vorrichtung gemäss Anspruch 1, **dadurch gekennzeichnet, dass** das wenigstens eine Peltier-Element (36 ) als kälte- und wärmeerzeugendes Element dient.

3. Vorrichtung gemäss Anspruch 1, **dadurch gekennzeichnet, dass** das wenigstens eine Peltier-Element (36 ) ausschliesslich als kälteerzeugendes Element dient.

4. Vorrichtung gemäss Anspruch 1, **dadurch gekennzeichnet, dass** sie ferner einen klappbaren Deckel (28) enthält, der ein Heizelement (52) enthält, das zum Beheizen der verschlossenen, im Träger (33) angeordneten Proberöhrchen (21) dient.

5. Vorrichtung gemäss Anspruch 1, **dadurch gekennzeichnet, dass** sie ferner ein Heizelement (35) enthält, das um den Träger (33) und entlang des Umfangs seiner zylindrischen, äusseren Wand angeordnet ist.

## Claims

1. A device for automatic performance of polymerase chain reactions in a number of test tubes, each test tube being closed by a lid and containing a predetermined volume of a liquid reaction mixture, the device containing the following components:
(a) a holder (33) having an arrangement of chambers (27) for holding the test tubes (21), each chamber being adapted to receive the lower part of a test tube, said holder (33) consisting of a material which has a high thermal conductivity and having an upper surface, a bottom surface, and a cylindrical outer wall, each of the chambers (27) of the holder (33) having an opening located in the upper surface of the holder,
(b) test tubes (21) disposed in the chambers (27) of the holder (33) and each closed by a lid (87),
(c) a computer-controlled automatic control system, and
(d) means controlled by the automatic control system for cyclic alteration of the temperature of the holder, said means containing at least one Peltier element (36),
which device is **characterised in that**
(i) the arrangement of the chambers (27) in the holder (33) is annular,
(ii) the at least one Peltier element (36) is connected thermally to the bottom surface of the holder, and
(iii) the at least one Peltier element (36) is pressed by a central spring-biased fixing (41, 42, 43, 44) against the holder (33), which fixing exerts a force on the centre of the Peltier element (36) and contains a spring (41) pressed by a screw (42), the tension of which can be adjusted by means of the screw.

2. A device according to claim 1, **characterised in that** the at least one Peltier element (36) serves as a cold-generating and heat-generating element.

3. A device according to claim 1, **characterised in that** the at least one Peltier element (36) serves solely as a cold-generating element.

4. A device according to claim 1, **characterised in that** it also contains a hinged lid (28) which contains a heating element (52) which serves to heat the closed test tubes (21) disposed in the holder (33).

5. A device according to claim 1, **characterised in that** it also contains a heating element (35) which is disposed around the holder (33) and along the periphery of its cylindrical outer wall.

## Revendications

1. Dispositif pour la réalisation automatique de réactions en chaîne de la polymérase dans une pluralité de récipients de réaction, dans le cas duquel chaque récipient de réaction est obturé par un couvercle et contient un volume prédéterminé d'un mélange en réaction liquide, dispositif qui contient les composants suivants :
a) un support (33) qui présente une disposition de chambres (27) pour recevoir les récipients de réaction, chaque chambre convenant pour recevoir la partie inférieure d'un récipient de réaction et le support (33) étant constitué d'un matériau qui présente une conductivité thermique élevée et comportant une surface supérieure, une surface inférieure et une paroi extérieure cylindrique, chacune des chambres (27) du support (33) ayant une ouverture qui se situe dans la surface supérieure du support,
b) des récipients de réaction (21) qui sont disposés dans les chambres (27) du support (33) et dont chacun est obturé par un couvercle (87), et
c) un mécanisme de commande et de régulation commandé par ordinateur, et
d) des moyens, commandés par le mécanisme de commande et de régulation, pour la modification, cyclique de la température du support, moyens qui comportent au moins un élément Peltier (36), dispositif qui se **caractérise par** le fait,
(i) que la disposition des chambres (27) dans le support (33) est annulaire,
(ii) que l'élément Peltier (36), dont il y a au moins un est thermiquement relié à la surface inférieure du support, et
(iii) que l'élément Peltier dont il y a au moins un (36) est pressé contre le support (33) par une fixation centrale, précontrainte élastiquement (41, 42, 43, 44), fixation qui exerce une force sur le milieu de l'élément Peltier (36) et contient un ressort (41), comprimé par une vis (42), dont on peut régler la contrainte avec la vis.

2. Dispositif selon la revendication 1, **caractérisé par le fait que** l'élément Peltier dont il y a au moins un (36) sert comme élément refroidisseur ou élément chauffant.

3. Dispositif selon la revendication 1, **caractérisé par le fait que** l'élément Peltier dont il y a au moins un (36) sert exclusivement comme élément refroidisseur.

4. Dispositif selon la revendication 1, **caractérisé par le fait qu'**il contient en outre un couvercle rabattable (28) qui contient un élément chauffant (52) qui sert à chauffer les éprouvettes (21), obturées, disposées dans le support (33).

5. Dispositif selon la revendication 1, **caractérisé par le fait qu'**il contient en outre un élément chauffant (35) qui est disposé autour du support (33) et le long de la périphérie de sa paroi cylindrique extérieure.
